**Europäisches Patentamt**

**European Patent Office**

**Office européen des brevets**

(11) Numéro de publication: **0 266 289**
**B1**

(12) **FASCICULE DE BREVET EUROPEEN**

(45) Date de publication du fascicule du brevet:
12.09.90

(51) Int. Cl.5: **B29C 47/00**, B29C 71/04

(21) Numéro de dépôt: 87420294.8

(22) Date de dépôt: 28.10.87

(54) Procédé de traitement de films complexes thermorétractables en polymères destinés notamment à l'emballage d'objets.

(30) Priorité: 31.10.86 FR 8615438

(43) Date de publication de la demande:
04.05.88 Bulletin 88/18

(45) Mention de la délivrance du brevet:
12.09.90 Bulletin 90/37

(84) Etats contractants désignés:
AT BE CH DE ES FR GB GR IT LI LU NL SE

(56) Documents cités:
FR-A- 2 311 661
US-A- 4 352 702

PLASTIQUES MODERNES ET ELASTOMERES,
no. 3, avril 1981, pages 58-62, Paris, FR; "Soufflage de
film: calculez votre bulle"
PLASTVERARBEITER,
vol. 32, no. 5, mai 1981, pages 581-586, Speyer/Rhein,
DE; M. SWERDLOW et al.: "Geringste Herstelldicke von
Polyethylen-Schlauchfolien - Eine Studie über biaxiale
Dehnströmung"
KUNSTSTOFFE,
vol. 71, no. 10, octobre 1981, pages 653-659, Munich, DE;
W.J. ZIMMERMANN et al.: "Extrudieren von Blasfolien"
PLASTVERARBEITER,
vol. 30, no. 7, juillet 1979, pages 383-389, Speyer/Rhein,

(73) Titulaire: CONSERVATOME, F-01120 DAGNEUX
MONTLUEL(FR)

(72) Inventeur: Martineu, Pierre, 67, avenue du 8 Mai 1945,
D-69500 Bron(FR)

(74) Mandataire: Vanlaer, Marcel et al, PECHINEY 28, rue de
Bonnel, F-69433 Lyon Cédex 3(FR)

(56) Documents cités: (suite)
DE; W.A. NEITZERT: "Basic facts about the
manufacture of formable thermoplastic film and sheet
material"
G. SCHENKEL: "Entwicklung und Erfahrungen in der
Herstellung von Blasfolien: 4. Schneckenpresse Bauart,
Grösse", pages 452-456
PLASTVERARBEITER,
vol. 32, no. 5, mai 1981, pages 573-579, Speyer/Rhein,
DE; "Kunststoff-Folien für die Verpackung -
Herstellung, Eigenschaften, Anwendung, Marktdaten,
Trends"
G. SCHREYER: "Konstruieren mit Kunststoffen, 1ére
édition, partie II, 1972, pages 705-712, Carl Hanser
Verlag, Munich, DE
PLASTICS & RUBBER INTERNATIONAL,
vol. 9, no. 4, août 1984, pages 12-15, Haywards Heath,
West Sussex, GB; J. DE COSTOBADIE: "Radiation
processing for polymers"

## Description

L'invention est relative à un procédé de traitement de films complexes thermorétractables en polymères, destinés notamment à l'emballage de produits soit incomplètement enveloppés, soit à enveloppe ouverte au moins sur un côté, soit de faible tenue mécanique et à enveloppe complètement fermée.

L'homme de l'art sait que des films ou des gaines constitués par une ou plusieurs couches de matière plastique peuvent acquérir des propriétés "de mémoire élastique". Ces films ou gaines qualifiés de "thermorétractables" présentent la propriété de se contracter lorsqu'ils subissent un traitement thermique. Cette propriété est exploitée notamment dans l'emballage pour protéger et ou regrouper des produits en particulier dans le domaine du fardelage et de la palettisation.

Parmi les procédés connus pour obtenir de tels complexes thermorétractables, on peut citer le procédé classique de la bulle qui consiste dans la succession des étapes suivantes:

- Coextrusion du film complexe au-dessus de sa température de fusion ou de sa température de viscoélasticité selon qu'il s'agit d'un polymère cristallin ou amorphe.

-Etirage suivant la technique de la bulle à une température comprise entre la température de cristallisation et la température de fusion de la ou des couche(s) qui doive(nt) être rendues thermorétractable(s), dans les cas des polymères cristallins ou dans le voisinage supérieur de la température de transition vitreuse, dans le cas des polymères amorphes.

- Refroidissement au-dessous de la température de cristallisation ou de la température de transition vitreuse, selon le cas, pour geler l'orientation moléculaire conférée au complexe au moment de l'étirage.

Plus précisément, lors de l'étirage, le film complexe de forme tubulaire est soumis à des tensions dans deux directions perpendiculaires:

– une tension, sens machine, qui dépend de la vitesse de traction de la bulle au moment de l'enroulement.

– une tension transversale, qui est fonction du taux de gonflage de la bulle.

Selon l'intensité relative des contraintes ainsi appliquées, le film est dit mono ou bi-orienté.

On peut dire globalement que le taux d'étirage Te du film est égal au produit du taux de tirage sens machine TT par le taux de gonflage TG dans le sens transversal.

Dans cette technique, le taux de tirage est particulièrement favorisé par rapport aux taux de gonflage notamment dans le cas des faibles épaisseurs.

En particulier, on peut noter, dans le document "Plastiques Modernes et Elastomères" n° 3 - Avril 1981 - p. 58-62 - Paris-FR - "Soufflage du film: calculez votre bulle", un taux d'étirement compris entre 10 et 100 pour des films polyéthylène tels quels.

La rétraction du film est fondée sur la relaxation de ces tensions par chauffage dans un four à une température située au-dessus de la température de cristallisation ou de transition vitreuse selon le cas, de la ou des couches thermorétractables.

Les propriétés du film rétracté dépendent bien entendu de la nature des polymères choisis mais aussi des taux d'orientation conférés au complexe.

Le procédé décrit ci-dessus présentent des inconvénients importants de plusieurs ordres:

D'une part, dans le cas où le polymère qui constitue la ou les couche(s) thermorétractable(s) est du type cristallin et présente un écart faible de température entre la température de cristallisation et la température de fusion.

En effet, au moment de sa rétraction, le polymère doit être porté à une température proche de sa température de fusion. A cette température, le film n'a plus de tenue mécanique: il se perfore au contact de l'objet à emballer sous l'action de la force de rétraction, il flue et il en résulte une distribution des épaisseurs du film complexe beaucoup trop large. Pour remédier à ces inconvénients, il est possible d'augmenter l'épaisseur du film mais ceci va grever le prix de l'emballage.

D'autre part, d'une manière générale, les taux de rétraction potentiels obtenus au moment de l'étirage sont très largement supérieurs à ceux utilisés au moment de l'emballage car, plus le taux d'orientation est important, meilleures sont les caractéristiques mécaniques du film. Dix pour cent seulement des taux de rétraction sont utilisés au moment de l'emballage, la rétraction étant bloquée par l'objet à emballer.

Il en résulte dans le cas d'une possiblité de rétraction libre, une perte de matière importante (surépaisseur de film inutile) et de graves inconvénients, notamment:

- dans le cas d'emballage d'objets ayant une faible tenue mécanique, car ceux-ci vont "tuiler", c'est-à-dire s'arquebouter sous l'action de l'expression de la rétraction.

- dans le cas de l'emballage de palettes, où le bas de la gaine, qui n'est pas tenu au centre de la face de la palette, va se retrousser (jupage) et découvrir les articles qu'elle était censée protéger. Pour y parer il faudra alors choisir une hauteur de gaine nettement supérieure à la hauteur de la palette.

D'autres procédés, pour conférer des propriétés de thermorétraction à des stratifiés, ont été envisagés et font appel à la mise en oeuvre de rayonnements ionisants mais, ne solutionnent pas pour autant les inconvénients mentionnés ci-dessus. On peut citer à ce propos le brevet français 2 311 661 et le brevet US 4 352 702.

Une analyse détaillée de ces brevets montre la succession des étapes suivantes:

- réticulation d'au moins une couche support,

- association à une ou plusieurs autres couches,

- réchauffage du stratifié,

2

- étirage,
- refroidissement.

Dans certaines variantes de ce procédé, une étape supplémentaire d'irradiation est prévue soit pour empêcher la délamination du stratifié (brevet français 2 311 661), soit pour modifier la résistance de soudure (brevet US n° 4 352 702).

Dans les procédés qui font appel à l'irradiation, l'opération d'étirage est toujours précédée d'une réticulation par les rayonnements ionisants de la ou des couche(s) qui doivent être rendues thermorétractables.

Comme il est expliqué dans ces brevets, cette irradiation a pour but de modifier le polymère pour conférer à la couche suffisamment de ténacité en température pour résister à l'étirage important du stratifié au moment de son orientation. C'est cet étirage qui en orientant le film va lui conférer des propriétés thermorétractables et bien sûr des propriétés mécaniques.

Comme cet étirage se fait généralement sous un taux relativement élevé, pour obtenir l'effet mémoire maximum et les meilleures caractéristiques mécaniques, il va forcément engendrer un taux de rétraction élevé, ce qui comme on l'a vu, peut, dans certains cas être gênant.

Dans le cas où la couche qui doit être rendue rétractable est constituée d'un polymère cristallin à température de cristallisation voisine de la température de fusion, la réticulation par irradiation de cette couche avant étirage va modifier les températures caractéristiques de ce polymère et lui conférer un comportement élastomérique en température. Aussi, au moment de la rétraction, le polymère modifié ne flue plus puisque sa nature propre a été changée avant l'orientation.

Par ailleurs, ce procédé nécessite par rapport au procédé classique de la bulle de soumettre avant l'étirage, le stratifié à un préchauffage au voisinage de 100° ce qui entraîne une consommation d'énergie supplémentaire.

Au passage, il faut remarquer que l'association de films irradiés à d'autres couches exige l'utilisation de machines supplémentaires de lamination.

En outre, il faut noter que tout incident de fabrication survenu au moment de l'opération de réchauffage-étirage se traduira par une perte sèche de matière, car le film support ayant été irradié a acquis une structure modifiée de sorte qu'il n'est plus possible de le recycler. De plus, les irradiateurs étant intégrés à la chaine de production, sont utilisés au rythme de la chaine, c'est-à-dire généralement en-dessous de leur capacité d'irradiation.

C'est en constatant les inconvénients de l'art antérieur que la demanderesse a mis au point un procédé qui, tout en n'ayant pas la prétention de conduire à des produits applicables dans tous les domaines des brevets précédents, permet néanmoins notamment dans son application aux emballages d'objets, soit incomplètement enveloppés, soit à enveloppe ouverte au moins sur un côté, soit de faible tenue mécanique et à enveloppe complètement fermée, de supprimer lesdits inconvénients et d'apporter en outre quelques autres avantages dans le domaine de la thermo-rétraction de polymères cristallins à température de cristallisation proche de la température de fusion.

Ce procédé s'applique au traitement de films complexes thermorétractables en polymères comportant au moins une couche d'abord rétractable et ensuite réticulable et au moins une couche possédant l'une au moins des bonnes propriétés de bonne résistance mécanique, d'imperméabilité au gaz, de bonne résistance chimique, de bonne qualité optique, de bonne résistance à chaud des soudures et comprend que l'on étire à chaud dans deux directions le film complexe sortant de la filière d'une machine de co-extrusion sans apport supplémentaire de chaleur, suivant un taux d'étirage compris entre 10 et 100, on met le produit obtenu sous une forme massive et on l'irradie à l'aide de rayonnement ionisant appartenant au groupe constitué par les gamma et les X.

Ainsi le procédé selon l'invention consiste donc à traiter un film complexe coextrudé comportant au moins une couche rétractable et réticulable ensuite et qui peut donc être un matériau choisi dans le groupe des polyoléfines constitué entre autres par les homopolymères et copolymères d'éthylène, type polyéthylène basse ou haute densité, linéaire, copolymères éthylène acétate de vinyle, éthylène/éthyl acrylate, éthylène/anhydride maléïque ... Cette couche présente, de préférence, un écart de moins de 20°C entre sa température de fusion et sa température de cristallisation.

A cette couche est associée au moins une autre couche possédant certaines propriétés particulières suivant l'application envisagée et qui peut être un matériau choisi dans le groupe constitué par les homopolymères ou copolymères à base de polyéléfine de polyamide de polyester tel que par exemple les polyéthylènes, les polypropylènes, les résines ionomères, le polyamide, l'éthylène vinyl alcool, le polytéréphtalate d'éthylène glycol...

A la différence des procédés qui font appel à l'irradiation, aucune de ces couches n'a été irradiée avant l'étirage. De ce fait, on a l'avantage de pouvoir utiliser un matériel conventionnel de coextrusion permettant d'obtenir le film complexe sous forme de gaine directement à partir de matériaux à l'état brut et non comme dans le cas où on associe un film à d'autres matériaux à l'état brut.

D'autre part, le fait de ne pas avoir irradié les couches avant leur assemblage, permet de meilleures propriétés d'adhérence à chaud entre elles. Le film obtenu est alors étiré dans deux directions directement à la sortie de l'extrudeuse en utilisant les calories propres du matériau, c'est-à-dire sans avoir besoin de le réchauffer.

Le taux d'étirage appliqué est compris entre 10 et 100 de manière à obtenir sur le produit final après irradiation, un taux de rétraction suffisant mais pas trop élevé pour acquérir les propriétés convenant notamment à l'emballage d'objets incomplètement enveloppés ou à faible tenue mécanique.

De plus, on s'est fixé suivant les deux directions un rapport entre le taux de tirage dans le sens machine et le taux de gonflage dans le sens transversal compris de préférence entre 1 et 15, rapport qui permet au mieux de conférer au film complexe les propriétés requises.

Le complexe ainsi obtenu est alors mis sous forme massive, en rouleau, ou plié en accordéon ou encore empilé après découpage sous forme de feuilles et cette masse est soumise à un rayonnement ionisant à forte profondeur de pénétration appartenant au groupe constitué par le rayonnement γ ou X.

Ce type d'irradiation dans la masse permet aux sources de rayonnement de travailler au maximum de leur capacité et ne sont plus ainsi liées à la cadence des machines d'extrusion. Les doses d'irradiation employées sont comprises entre 1 et 10 Mrad et de préférence 2 à 4 Mrad.

Cette irradiation après étirage et embobinage permet par réticulation des couches réticulables de moduler les propriétés de rétraction en fonction de la dose reçue et du taux d'étirage appliqué avant réticulation.

Ainsi, il est possible de réduire dans des proportions allant jusqu'à plus de la moitié, le taux de rétraction lors du réchauffage après emballage des objets.

Il en résulte une tendance au tuilage pratiquement nulle dans le cas d'objets de faible tenue mécanique tels que par exemple les disques, les paquets de copie de faible épaisseur qui s'arqueboutent en général sous l'action d'un retrait trop important de l'emballage. De même, il est possible d'utiliser des hauteurs de housse rétractable plus faibles sans que la charge palettisée soit découverte partiellement par la housse rétractée.

Par ailleurs, cette irradiation après étirage permet de rééquilibrer les tensions suivant les deux orientations et d'avoir un complexe qui épouse mieux le contour des objets à emballer.

En outre, dans le cas où la couche rétractable est constituée d'un polymère cristallin à température de cristallisation voisine du point de fusion, tel que le polyéthylène, par exemple, l'irradiation après étirage permet d'empêcher le fluage du film dans le four de rétraction et autorise une excellente répartition des épaisseurs du film rétracté autour de l'emballage.

Ce faible taux de rétraction combiné avec une bonne résistance thermique du complexe permet d'utiliser du film de faible épaisseur sans risque de déchirure du film et entraîne donc une économie de matière sur l'épaisseur dans leur application, en particulier aux housses ou aux laizes de fardelage. Autant de résultats qui constituent des avantages par rapport aux procédés précédents sans compter les faits qu'il n'est pas nécessaire ici de réaliser une deuxième irradiation et que les produits rebutés par suite de défauts générés lors de l'étirage peuvent être recyclés facilement puisque leurs propriétés n'ont pas été modifées par la réticulation.

On peut ajouter que des matériaux ayant d'autres propriétés telles que la résistance mécanique, la résistance chimique, la résistance à chaud des soudures, l'imperméabilité au gaz, l'aspect optique ... associés aux matériaux thermorétractables peuvent être choisis de sorte que la performance recherchée soit exaltée au moment de l'irradiation de l'ensemble du complexe. La présente invention peut être illustrée à l'aide des exemples d'application suivants:

## Exemple 1

On prépare une gaine à soufflets complexe, composée de deux couches:
- une couche extérieure en polyéthylène basse densité d = 0,925 en mélange avec une copolymère éthylène vinyl acétate à 28 % de teneur en acétate de vinyle à raison de 10 %. Cette couche joue le rôle de couche rétractable et a été spécialement formulée pour être réticulable par irradiation.
- une couche intérieure en polypropylène copolymère statistique à 4 % en teneur d'éthylène, en mélange avec 10 % d'un copolymère éthylène vinyl acétate à 14 % d'acétate de vinyle. Cette couche a une fonction anti-collante et est destiné à éviter le collage entre la gaine et les packs déjà emballés sous polyéthylène, au moment de la rétraction.

La gaine a une laize à plat de 1.225 mm et possède 4 soufflets de 425 mm. Son épaisseur est de 70 μm. La couche en polyéthylène est de 55 μm, la couche en polypropylène est de 15 μm. La fabrication de cette gaine est réalisée sur une machine de coextrusion équipée d'une filière de 350 mm de diamètre.

A la sortie de la filière, le complexe est étiré directement dans le sens machine (SM) et dans le sens transversal (ST) à une température de 108°C. Le diamètre de la bulle est de 1.320 mm. Le taux de gonflage est donc de 3.8. L'entrefer de sortie étant de 2 mm, le taux d'étirage global est de 28, le taux de tirage sens machine est de 7,4.

La gaine à soufflets est enroulée sous forme de bobines de diamètre 420 mm sur un mandrin carton de diamètre 85 mm.

Une de ces bobines est déroulée pour fabriquer des housses soudées d'une hauteur de 2.300 mm. Ces housses sont pliées par paquet de vingt housses.

La gaine sous forme de bobines et les housses sous forme de paquet sont soumis à un traitement par les rayonnements ionisants.

Les rayonnements ionisants utilisés sont ceux émis par le cobalt 60 d'énergie 1,17 et 1,33 MeV. Le débit de dose moyen utilisé est de 0,1 Mrad/heure.

Les doses délivrées sur les gaines et sur les housses sont de 2,5 et 5 Mégarads.

Pour mettre en valeur les performances apportées par ce procédé, différents tests sont effectués.

Sur la gaine à soufflets, on procède à des essais de laboratoire pour déterminer:
- les taux de rétraction sens machine et sens transversal:

plusieurs éprouvettes de 50 mm de long et de 15 mm de largeur sont découpées dans chaque sens. Ces éprouvettes sont immergées pendant 30 secondes dans un bain d'huile porté à 200°C pour les rétracter. Après les avoir laissé refroidir à l'ambiance, on mesure les nouvelles dimensions des éprouvettes et on exprime les résultats sous forme de pourcentage.
- les propriétés de traction à 80°C pour mettre en évidence le meilleur comportement thermique du polymère; ces mesures sont effectuées au moyen d'un dynamomètre JJ Instruments équipé d'une chambre d'ambiance, avec une vitesse de traction de 100 mm/minute. Les résultats sont exprimés en daN/mm².
- les caractéristiques d'adhérence entre couches:

des échantillons de 15 mm de large sont soumis à un test de traction avec une vitesse de 300 mm par minute et un angle de pelage de 90° par rapport au complexe. Les résultats sont exprimés en gramme.

Sur les housses soudées, on procède à des essais pratiques. Ces housses sont positionnées sur une palette de 1.200 mm par 800 mm d'une hauteur de 1.800 mm. Avant rétraction, les housses arrivent au ras de la palette. On procède alors à la rétraction au moyen d'un pistolet de rétraction. On mesure alors les hauteurs de jupage et on note la présence éventuelle de trous dans la housse.

Les résultats sont reportés dans les tableaux suivants:

**. Résultats sur la gaine**

| Dose d'irradiation en Mrad | | 0 | 2,5 | 5 |
|---|---|---|---|---|
| Taux de rétraction en % | SM | 78 | 60 | 45 |
| | ST | 43 | 14 | 15 |
| Module de traction 80°C daN/mm² | SM | 2,5 | 2,76 | 3,63 |
| | ST | 3,8 | 4,72 | 4,75 |
| Force de délaminage en g pour éprouvette de 15 mm | | 90 | 140 | 420 |

**. Résultats sur la housse**

| Dose d'irradiation en Mrad | 0 | 2,5 | 5 |
|---|---|---|---|
| Hauteur de jupage mm | 38 | 17 | 8 |
| Aspect | nombreux trous | pas de trou | pas de trou |

### Exemple 2

On prépare un film complexe de 450 mm de laize, composé de trois couches:
- les couches extérieures sont identiques et sont composées d'un copolymère éthylène/vinyl acétate à 5 % en teneur de vinyl acétate. Ces couches jouent le rôle de couches rétractables et sont réticulables par irradiation.
- la couche intérieure est composée d'une résine ionomère à forte brillance et transparence. Cette couche a une fonction de présentation grâce à ses excellentes propriétés optiques.

Le complexe extrudé est réalisé en laize de 1.900 mm de sorte que l'on puisse prélever quatre bobines de laize 450 mm. Les trois couches ont une épaisseur identique et l'épaisseur totale du complexe est de 21 µm.

La fabrication de ce film est réalisée sur une machine de coextrusion équipée d'une filière de 300 mm. A la sortie de la filière, le complexe est étiré dans les deux directions à une température de 115°C. Le diamètre de la bulle est de 1.210 mm. Le taux de gonflage est de 3,8. L'entrefer de sortie est de 1,4 mm, le taux d'étirage global est de 66 et le taux de tirage sens machine est de 17,5.

La gaine est fendue et les films sont enroulés séparément à plat, sous forme de bobines de laize 450 mm et de diamètre 280 mm. Les bobines sont exposées aux rayonnements ionisants du Cobalt 60 jusqu'à une dose de 3,5 Mégarads.

Le film est alors utilisé sur une machine à conformateur pour emballer une revue de dimensions 21 x 29,7 mm d'épaisseur 5 mm.

Le film enveloppe la revue transversalement et se recouvre sur 40 mm et est soudé longitudinalement. Dans le sens longitudinal, le film a une longueur supérieure d'environ 40 mm à la longueur de la revue. Le film est soudé transversalement de part et d'autre, de sorte que la revue soit totalement enveloppée et fermée.

La revue ainsi emballée passe alors durant 5 secondes dans un four dont la température est portée à 180°C.

Ces opérations sont réalisées successivement avec le film complexe non irradié et le film irradié à 3,5 Mrad.

Après refroidissement et examen de la revue emballée, on constate que la revue enveloppée avec le film non irradié s'est arqueboutée et présente une flèche de 4 cm alors que la revue emballée avec le film irradié est restée totalement plane.

### Revendications

1. Procédé de traitement de films complexes thermorétractables en polymères comportant au moins une couche d'abord rétractable et ensuite réticulable, et au moins une couche possédant l'une au moins des propriétés de bonne résistance mécanique, d'imperméabilité aux gaz, de bonne résistance chimique, de bonne qualité optique, de bonne résistance à chaud des soudures, dans lequel l'on étire d'abord à chaud dans deux directions le film complexe sortant de la filière d'une machine de coextrusion sans apport supplémentaire de chaleur suivant un taux d'étirage compris entre 10 et 100, puis que l'on met le produit obtenu sous une forme massive et qu'enfin on l'irradie à l'aide d'un rayonnement ionisant appartenant au groupe constitué par les gamma et les X.

2. Procédé selon la revendication 1, caractérisé en ce que, lors de l'étirage, le rapport du taux de tirage dans le sens de l'extrusion au taux de gonflage dans le sens transversal est compris entre 1 et 15.

3. Procédé selon la revendication 1, caractérisé en ce que l'on irradie à une dose comprise entre 1 et 10 Mrad.

4. Procédé selon la revendication 3, caractérisé en ce que l'on irradie à une dose comprise entre 2 et 4 Mrad.

5. Procédé selon la revendication 1, caractérisé en ce que la couche rétractable et réticulable appartient au groupe constitué par les polyoléfines.

6. Procédé selon la revendication 5, caractérisé en ce que la couche rétractable et réticulable présente un écart de température de moins de 20°C entre la température de fusion et la température de cristallisation du polymère.

7. Procédé selon la revendication 1 caractérisé en ce que la couche possédant l'une au moins des propriétés de bonne résistance mécanique, d'imperméabilité aux gaz, de bonne résistance chimique, de bonnes qualité optique, de bonne résistance à chaud des soudures, appartient au groupe constitué par les homopolymères ou copolymères à base de polyoléfine, de polyamide, de polyester.

### Claims

1. A process for treating heat-shrinkable complex films of polymers comprising at least one layer which is firstly shrinkable and then crosslinkable and at least one layer having at least one of the properties of high mechanical strength, impermeability to gases, high chemical resistance, high optical quality, high heat resistance of the welds, in which the complex film issuing from the die of a coextrusion machine is firstly drawn while hot in two directions without additional supply of heat according to a drawing rate of between 10 and 100, then the product obtained is put into a solid form and is finally irradiated by ionising radiation belonging to the category made up of gamma and X-rays.

2. A process according to claim 1, characterised in that, during the drawing operation, the ratio of the drawing rate in the extrusion direction to the swelling rate in the transverse direction is between 1 and 15.

3. A process according to claim 1, characterised in that irradiation is carried out with a dose of between, and 10 Mrad.

4. A process according to claim 3, characterised in that irradiation is carried out with a dose of between 2 and 4 Mrad.

5. A process according to claim 1, characterised in that the shrinkable and crosslinkable layer belongs to the category made up of polyolefins.

6. A process according to claim 5, characterised in that the shrinkable and crosslinkable layer has a temperature deviation of less than 20°C between the melting temperature and the crystallisation temperature of the polymer.

7. A process according to claim 1, characterised in that the layer having at least one of the properties of high mechanical strength, impermeability to gases, high chemical resistance, high optical quality, high heat resistance of the welds belongs to the category made up of homopolymers or copolymers based on polyolefin, polyamide, polyester.

**Patentansprüche**

1. Verfahren zur Behandlung von mehrlagigen wärmeschrumpfbaren Folien aus Polymeren mit wenigstens einer zunächst schrumpfbaren und danach vernetzbaren Schicht und wenigstens einer Schicht, die wenigstens eine der Eigenschaften guter mechanischer Festigkeit, Undurchlässigkeit für Gase, guter chemischer Beständigkeit, guter optischer Qualität und guter Wärmefestigkeit der Schweißverbindungen aufweist, bei dem man zunächst die aus der Düse einer Koextrusionsmaschine austretende mehrlagige Folie ohne ergänzende Wärmezufuhr entsprechend einem Streckgrad im Bereich von 10 bis 100 in zwei Richtungen warmstreckt. Man dann das erhaltene Erzeugnis in eine gedrängte Form bringt und man es schließlich mit Hilfe einer zu der aus den γ- und Röntgenstrahlen bestehenden Gruppe gehörenden ionisierenden Strahlung bestrahlt.

2. Verfahren nach dem Anspruch 1, dadurch gekennzeichnet, daß beim Strecken das Verhältnis des Streckgrades in der Richtung der Extrusion zum Schwellgrad in der Querrichtung im Bereich von 1 bis 15 ist.

3. Verfahren nach dem Anspruch 1, dadurch gekennzeichnet, daß man mit einer Dosis im Bereich von 1 bis 10 Mrad bestrahlt.

4. Verfahren nach dem Anspruch 3, dadurch gekennzeichnet, daß man mit einer Dosis im Bereich von 2 bis 4 Mrad bestrahlt.

5. Verfahren nach dem Anspruch 1, dadurch gekennzeichnet, daß die schrumpfbare und vernetzbare Schicht zu der aus den Olefinen bestehenden Gruppe gehört.

6. Verfahren nach dem Anspruch 5, dadurch gekennzeichnet, daß die schrumpfbare und vernetzbare Schicht einen Temperaturabstand von weniger als 20°C zwischen der Schmelztemperatur und der Kristallisationstemperatur des Polymers aufweist.

7. Verfahren nach dem Anspruch 1, dadurch gekennzeichnet, daß die Schicht, die wenigstens eine der Eigenschaften guter mechanischer Festigkeit, Undurchlässigkeit für Gase, guter chemischer Beständigkeit, guter optischer Qualität und guter Wärmefestigkeit der Schweißverbindungen aufweist, zu der aus den Homopolymeren oder Copolymeren auf Polyolefin-, Polyamid- und Polyesterbasis bestehenden Gruppe gehört.